# EUROPÄISCHE PATENTSCHRIFT

(11) **EP 1 737 694 B1**
(45) Veröffentlichungstag und Bekanntmachung des Hinweises auf die Patenterteilung: **21.09.2011**
(21) Anmeldenummer: 05716462.6
(22) Anmeldetag: 31.03.2005
(51) Int. Cl.: F28D 1/047

(54) **VERFAHREN ZUR HERSTELLUNG EINES WÄRMETAUSCHERS FÜR EIN KRAFTFAHRZEUG**
METHOD FOR THE PRODUCTION OF A HEAT EXCHANGER FOR A MOTOR VEHICLE.
PROCEDE DE PRODUCTION D' UN ECHANGEUR THERMIQUE POUR VEHICULE AUTOMOBILE

(30) Priorität: 23.04.2004 DE 102004019769
(43) Veröffentlichungstag der Anmeldung: 03.01.2007
(73) Patentinhaber: Bayerische Motoren Werke Aktiengesellschaft, 80809 München (DE)
(72) Erfinder: RINGHOLZ, Thomas, 82481 Mittenwald (DE)
(74) Vertreter: Bücken, Helmut
(86) Internationale Anmeldenummer: PCT/EP2005/003351
(87) Internationale Veröffentlichungsnummer: WO 2005/105504

(56) Entgegenhaltungen:
- EP-A- 1 445 435
- FR-A- 2 833 920
- US-A- 5 645 125
- HONDA MOTORS EUROPE (NORTH) GMBH: "Fireblade - Geballte Rennsportkompetenz" INTERNET CITATION, Februar 2004 (2004-02), XP002328929 in der Anmeldung erwähnt
- PATENT ABSTRACTS OF JAPAN Bd. 2000, Nr. 17, 5. Juni 2001 (2001-06-05) & JP 01 148681 A (SUZUKI MOTOR CO LTD), 12. Juni 1989 (1989-06-12)
- KERN J: "NEUE KONSTRUKTION GELOETETER GANZ-ALUMINIUM-KUEHLER FUER KFZ" ATZ AUTOMOBILTECHNISCHE ZEITSCHRIFT, FRANCKH., STUTTGART, DE, Bd. 100, Nr. 9, September 1998 (1998-09), Seiten 670-673, XP000780497 ISSN: 0001-2785
- PATENT ABSTRACTS OF JAPAN Bd. 014, Nr. 499 (M-1042), 31. Oktober 1990 (1990-10-31) & JP 02 205251 A (TOYO RADIATOR CO LTD), 15. August 1990 (1990-08-15)
- PATENT ABSTRACTS OF JAPAN Bd. 016, Nr. 041 (M-1206), 31. Januar 1992 (1992-01-31) & JP 03 246185 A (SUZUKI MOTOR CORP), 1. November 1991 (1991-11-01)
- PATENT ABSTRACTS OF JAPAN Bd. 014, Nr. 473 (M-1035), 16. Oktober 1990 (1990-10-16) & JP 02 190223 A (NIPPON DENSO CO LTD), 26. Juli 1990 (1990-07-26)

## Beschreibung

Die Erfindung betrifft ein Verfahren zur Herstellung eines Wärmetauschers für ein Kraftfahrzeug, insbesondere für ein Kraftrad, mit einem ersten und einem zweiten Sammelkasten sowie einem zwischen den Sammelkästen angeordneten, durchströmbaren, gebogenen Kühlkörper, welcher zur Verbindung mit den Sammelkästen seitliche Anschlussebenen und zwischen den Sammelkästen eine längere und eine kürzere Seite aufweist.

Die Kühlung leistungsfähiger Brennkraftmaschinen erfolgt in Kraftfahrzeugen üblicherweise mittels eines Kühlmittels, welches Wärme an zu kühlenden Bereichen der Brennkraftmaschine aufnimmt und diese an anderer Stelle über einen luftdurchströmbaren Wärmetauscher wieder abgibt. Die Wärmeentwicklung und damit das Erfordernis zur Abgabe der Wärme über den Wärmetauscher ist abhängig von der Leistung der Brennkraftmaschine. Sehr leistungsfähige Brennkraftmaschinen benötigen besonders wirksame Wärmetauscher mit einer größtmöglichen anströmbaren Fläche.

Gerade im Kraftradbereich ist jedoch die zur Verfügung stehende Fläche begrenzt. Insbesondere bei sehr leistungsfähigen Brennkraftmaschinen und/oder wenn aufgrund konstruktiver Gegebenheiten ein nur geringer Bauraum zur Verfügung steht, müssen zum Teil sehr aufwändige Maßnahmen ergriffen werden, um eine ausreichende Kühlleistung zu gewährleisten.

Aus dem Honda Firmenprospekt Fireblade von 02/2004 ist ein leistungsfähiger Wärmetauscher für ein Kraftrad bekannt, welcher in Einbaulage unten eine seitlich abgeschrägte Anströmfläche aufweist und um die Hochachse gebogen ist. Der bekannte Wärmetauscher mit seitlichen Sammelkästen umfasst einen quer kühlmitteldurchströmbaren Kühlkörper, welcher zwischen den Sammelkästen oben eine längere und unten eine kürzere Seite aufweist und aus einer Vielzahl einzelner Querrohre gebildet ist. Sowohl der Kühlkörper als auch die mit dem Kühlkörper fest verbundenen Sammelkästen des bekannten Wärmetauschers sind aus Metall gefertigt, wobei die einzelnen Bauteile miteinander verschweißt sind.

Der gebogene Kühlkörper des Wärmetauschers weist an seiner oberen, längeren Seite einen kleineren Biegeradius auf, als die untere, kürzere Seite, mit der Folge, dass die seitlichen Sammelkästen eine Torsion erfahren, welche zu Spannungen führt. Der Abbau dieser Spannungen erfolgt über Bereiche geringerer Festigkeit, oft über einen sehr langen Zeitraum hinweg.

Aus der JP02190223 ist ein Verfahren zur Herstellung eines Wärmetäuschers für ein Kraftfahrzeug bekannt, gemäss dem einleitenden Teil des Anspruchs 1. Der Wärmetauscher weist einen ersten und einen zweiten Sammelkasten sowie einem zwischen den Sammelkästen angeordneten, durchströmbaren, gebogenen Kühlkörper auf. Zunächst werden die Sammelkästen mit den seitlichen Anschlussebenen des ebenen Kühlkörpers verbunden. Nachfolgend wird der Kühlkörper gebogen.

Der Erfindung geht von der Aufgabe aus, ein eingangs genanntes Verfahren weiter zu verbessern und insbesondere den Spannungsabbau bei tordierten Sammelkästen vorteilhaft zu begünstigen. Es soll ein besonders wirtschaftliches Verfahren zur Herstellung eines derartigen Wärmetauschers bereitgestellt werden.

Die Lösung der Aufgabe erfolgt mit dem Verfahren mit den Merkmalen des Anspruchs 1. Die Sammelkästen bestehen aus einem Werkstoff mit wesentlich geringeren Festigkeitswerten, als der Werkstoff des Kühlkörpers.

Vorteilhafte Ausgestaltungen und Weiterbildungen der Erfindung sind Gegenstand des Unteranspruchs.

Besonders bevorzugt ist es, wenn der Werkstoff des Kühlkörpers wenigstens die 1,5-fache, insbesondere die ca. 2,5- bis 20-fache Festigkeit des Werkstoffes der Sammelkästen aufweist. Zweckmäßigerweise besteht der Kühlkörper aus Metall und die Sammelkästen sind aus Kunststoff gefertigt. Es bietet sich an, den Kühlkörper aus Leichtmetall oder einer Leichtmetalllegierung, wie Aluminiuimlegierung, und die Sammelkästen aus einem Thermoplasten, wie Polyamid, herzustellen.

Gemäß eines sehr vorteilhaften Ausführungsbeispiels weist der Kühlkörper in Einbaulage unten eine seitlich abgeschrägte oder abgerundete Anströmfläche und an seinen seitlichen Anschlussebenen zur Verbindung mit den Sammelkästen umbördelbare Laschen auf, welche unter Einbeziehung einer Dichtung dicht mit dem Kühlkörper verbunden sind.

Als günstig hat es sich erwiesen, mit einem der Sammelkästen ein Gehäuse zur Aufnahme eines den Wärmetauscherdurchfluss temperaturabhängig steuernden Thermostatventils integral zu verbinden. Ebenso wird es als zweckmäßig angesehen, wenn die Sammelkästen mit Befestigungsstellen zur Festlegung am Kraftfahrzeug und/oder zur Befestigung weiterer Elemente versehen sind.

Das erfindungsgemäße Verfahren zur Herstellung eines derartigen Wärmetauschers zeichnet sich dadurch aus, dass die Sammelkästen mit dem ebenen Kühlkörper an dessen seitlichen Anschlussebenen verbunden werden und nachfolgend eine Biegung des Kühlkörpers erfolgt, wobei nach der Biegung die längere Seite des Kühlkörpers einen kleineren Biegeradius aufweist, als kürzere Seite, sodass mit der Biegung des Kühlkörpers die mit dessen seitlichen Anschlussebenen verbundenen Sammelkästen tordieren.

Vorteilhafterweise werden die bei der Biegung des Kühlkörpers und der damit verbundenen Torsion der Sammelkästen auftretenden Spannungen im wesentlichen von den Sammelkästen aufgenommen und sind in den Sammelkästen werkstoffbedingt abbaubar.

Sehr zweckmäßig ist es, wenn der Spannungsabbau in den Sammelkästen mittels Wärme und/oder den Werkstoff der Sammelkästen entfestigende Stoffe unterstützt wird.

Nachfolgend ist die Erfindung anhand eines Ausführungsbeispiels unter Bezugnahme auf Figuren näher beschrieben, dabei zeigen schematisch und beispielhaft
- Figur 1: ein Kraftrad mit einem Wärmetauscher,
- Figur 2a: einen Wärmetauscher für ein Kraftrad, mit einem zwischen zwei Sammelkästen angeordneten, gebogenen Kühlkörper in ISO- Ansicht,
- Figur 2b: einen Wärmetauscher für ein Kraftrad, mit einem zwischen zwei Sammelkästen angeordneten, gebogenen Kühlkörper in Seitenansicht,
- Figur 2c: einen Wärmetauscher für ein Kraftrad, mit einem zwischen zwei Sammelkästen angeordneten, gebogenen Kühlkörper von oben und
- Figur 3: einen Wärmetauscher für ein Kraftrad, mit einem zwischen zwei Sammelkästen angeordneten, gebogenen Kühlkörper mit tordierter Sammelkastenanschlussebene.

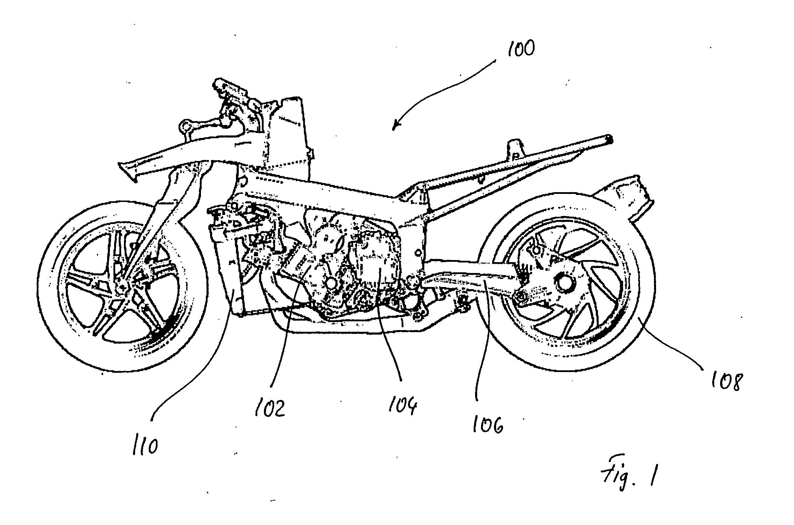

Figur 1 zeigt ein Kraftrad 100. Zum Antrieb des Kraftrads 100 ist eine Hubkolben-Brennkraftmaschine 102 vorgesehen, welche unter Zwischenschaltung eines Getriebes 104 die Antriebskraft beispielsweise mittels einer Kardanwelle 106, eines Antriebsriemens oder einer Antriebskette, auf das angetriebene Rad 108 überträgt. Die Kühlung der Brennkraftmaschine 102 erfolgt mittels eines umgewälzten Kühlmittels, welches Wärme an zu kühlenden Bereichen der Brennkraftmaschine aufnimmt und diese an anderer Stelle über einen luftdurchströmbaren Wärmetauscher 110 wieder abgibt.

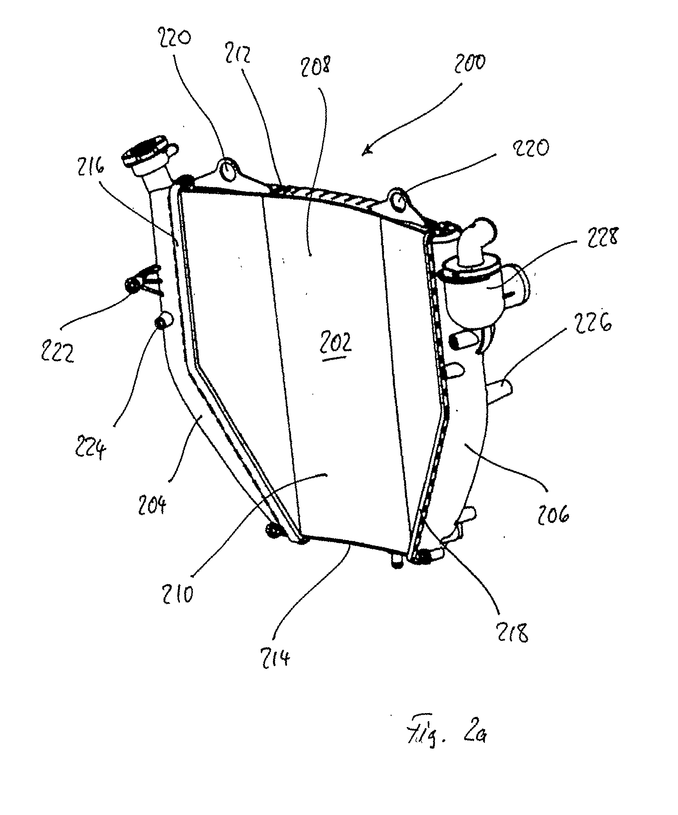

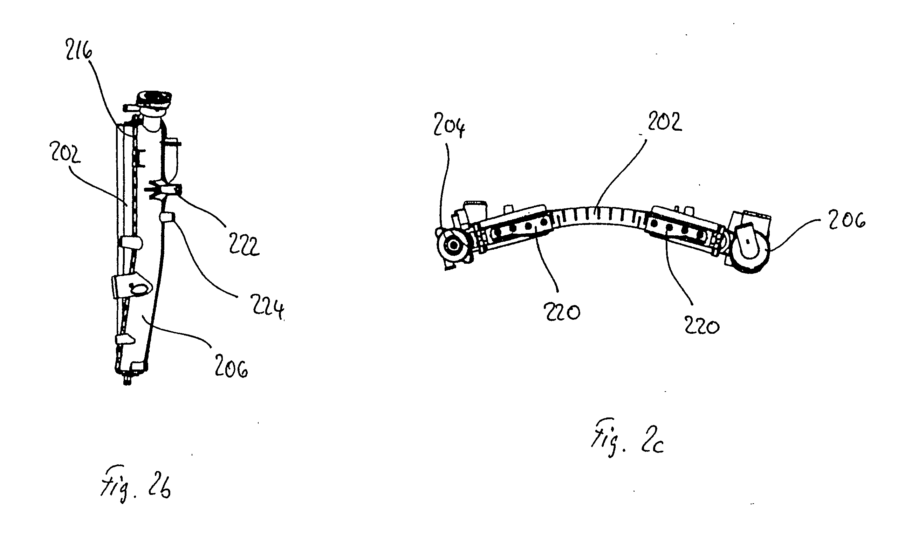

Ein Wärmetauscher 200 zur Kühlung der Brennkraftmaschine eines Kraftrads, mit einem zwischen einem kühlervorläufseitigen Sammelkasten 204 und einem kühlerrücklaufseitigen Sammelkasten 206 angeordneten, gebogenen Kühlkörper 202 ist in ISO-Ansicht in Figur 2a dargestellt, eine Seitenansicht auf den kühlervorlaufseitigen Sammelkasten 204 zeigt Figur 2b, Figur 2c zeigt den gebogenen Wärmetauscher 200 von oben.

Der Kühlkörper 202 weist in Einbaulage unten eine seitlich abgeschrägte Anströmfläche auf. Vorliegend ist die angeströmte Fläche des Kühlkörpers 202 geometrisch durch einen oberen, rechteckigen Bereich 208 und einen unteren, trapezförmigen Bereich 210 gebildet, jedoch kann es auch zweckmäßig sein, wenn der Kühlkörper 202 eine andere, dem Bauraum angepasste, beispielsweise V-Förmige, Fläche aufweist. Hervorgehoben wird, dass der Kühlkörper 202 zwischen den Sammelkästen 204, 206 eine längere Seite 212 und eine kürzere Seite 214 aufweist.

Der Kühlkörper 202 umfasst eine Vielzahl vom kühlervorlaufseitigen Sammelkasten 204 zum kühlerrücklaufseitigen Sammelkasten 206 durchströmbare Querrohre, welche jeweils fest mit seitlichen Anschlussebenen 216, 218 zur Verbindung mit den Sämmelkästen 204, 206 verbunden sind. Die Querrohre sowie die seitlichen Anschlussebenen 216, 218 bestehen aus Metall, insbesondere aus Leichtmetall oder einer Leichtmetallegierung, wie Aluminium und sind miteinander verlötet, verschweißt oder verklebt.

Zur Verbindung der Sammelkästen 204, 206 mit den seitlichen Anschlussebenen 216, 218 weisen die Anschlussebenen 216, 218 umlaufend umbördelbare Laschen auf, welche in montiertem Zustand einen umlaufenden Rand der Sammelkästen 204, 206 hintergreifen. Zur dichten Verbindung der Sammelkästen 204, 206 an den seitlichen Anschlussebenen 216, 218 sind hier nicht sichtbare Dichtungen vorgesehen. Die Sammelkästen 204, 206 bestehen aus einem Thermoplasten, wie glasfaserverstärktem Polyamid, z.B. PA 6.6 mit 30 % Glasfaser. Mit dem kühlerrücklaufseitigen Sammelkasten 206 ist ein Gehäuse 228 zur Aufnahme eines den Wärmetauscherdurchfluss temperaturabhängig steuernden Thermostatventils integral verbunden.

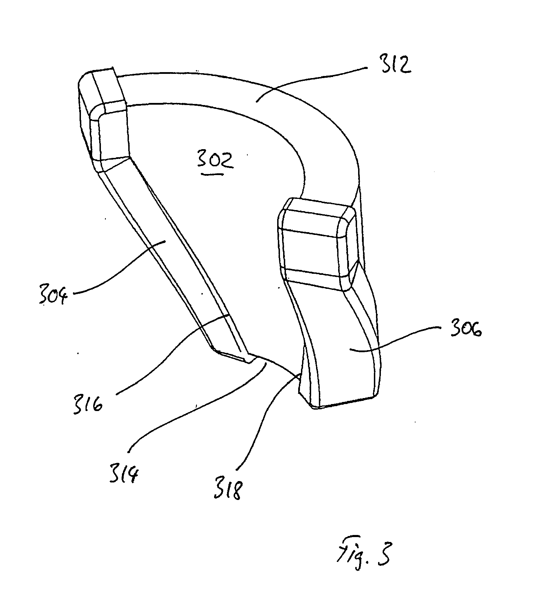

Die Fertigung des Wärmetauschers 200 geht aus von einem flachen, nicht gebogenen Kühlkörper 202 mit seitlichen Anschlussebenen 216, 218. Es werden die Sammelkästen 204, 206 mit Dichtung angebracht und durch umbördeln der Laschen fixiert. Im Folgenden wird der Kühlkörper 202, 302, wie in Figur 3 übertrieben dargestellt, gebogen, wobei aufgrund des unterschiedlichen Biegewiderstandmoments die längere Seite 212, 312 eine größere Biegung erfährt, als die kürzere Seite 214, 314 mit der Folge, dass die Sammelkästen 204, 206, 304, 306 zusammen mit den Anschlussebenen 216, 218, 316, 318 tordieren.

Die aus Kunststoff bestehenden Sammelkästen 204, 206, 304, 306 weisen gegenüber dem metallischen Werkstoff des Kühlkörpers 202, 302 und der Anschlussebenen 216, 218, 316, 318 geringere Festigkeitswerte auf und nehmen entsprechend einen wesentlichen Teil der bei der Verformung auftretenden Spannungen auf, sodass insbesondere der Bereich der Verbindung der einzelnen Kühlerquerrohre mit den Anschlussebenen 216, 218, 316, 318 entlastet ist. Vorliegend weist der Kunststoff der Sammelkästen 204, 206, 304, 306 einen Festigkeitswert Rₘ von 30 - 80 N/mm² auf, der Kühlkörper 202, 302 und die Anschlussebenen 216, 218, 316, 318 bestehen aus einer Aluminiumlegierung mit einem Festigkeitswert Rₘ von 200 - 600 N/mm², sodass das Material des Kühlkörpers 202, 302 und der Anschlussebenen 216, 218, 316, 318 die 2,5- bis 20-fache Festigkeit des Werkstoffes der Sammelkästen 204, 206, 304, 306 aufweist.

Die bei der Verformung des Kühlkörpers 202, 302, der Anschlussebenen 216, 218, 316, 318 und der Sammelkästen 204, 206, 304, 306 auftretenden Spannungen werden insbesondere in den Sammelkästen werkstoffbedingt abgebaut durch ein Fließen des Werkstoffes, Der Spannungsabbau in den Sammelkästen wird mittels Wärme und/oder den Werkstoff der Sammelkästen entfestigende Stoffe unterstützt, beispielsweise wirkt das Kühlmittel der Brennkraftmaschine betriebstemperaturbedingt und/oder durch enthaltenes Glykol entfestigend. Vorliegend wird eine Entfestigung des Werkstoffes der Sammelkästen 204, 206, 304, 306 um 30 - 40 % erreicht. Der Abbau innerer Spannungen erfolgt vergleichsweise schnell und wirkt sich sehr günstig auf die dauerhafte Funktionsfähigkeit des Wärmetauschers aus, bei der Fertigung kann der Ausschuss verringert werden.

Die Sammelkästen 204, 206 sind mit Befestigungsstellen zur Festlegung am Kraftfahrzeug 220 und/oder zur Befestigung weiterer Elemente 222, 224, 226, wie Lüfterzage und Lüfter, Verkleidungsteile, Luftführungen und/oder Schutzgitter, versehen. Bei der Herstellung der Sammelkästen 204, 206 wird die torsionsbedingte Verlagerung im Montagezustand vorgehalten, sodass alle Befestigungs- und Anschlussstellen nach der Verformung ihre Solllage einnehmen.

## Patentansprüche

1. Verfahren zur Herstellung eines Wärmetauschers (110, 200) für ein Kraftfahrzeug, insbesondere Kraftrad (100), mit einem ersten und einem zweiten Sammelkasten (204, 206, 304, 306) sowie einem zwischen den Sammelkästen (204, 206, 304, 306) angeordneten, durchströmbaren, gebogenen Kühlkörper (202, 302), welcher zur Verbindung mit den Sammelkästen (204, 206, 304, 306) seitliche Anschlussebenen (216, 218, 316, 318) und zwischen den Sammelkästen (204, 206, 304, 306) eine längere und eine kürzere Seite (212, 214, 312, 314) aufweist, wobei die Sammelkästen (204, 206, 304, 306) aus einem Werkstoff mit wesentlich geringeren Festigkeitswerten (Rₘ) als der Werkstoff des Kühlkörpers (202, 302) bestehen, **dadurch gekennzeichnet, dass**
- zunächst die Sammelkästen (204, 206, 304, 306) mit den seitlichen Anschlussebenen (216, 218, 316, 318) des ebenen Kühlkörper (202, 302) verbunden werden, wobei die torsionsbedingte Verlagerung der Sammelkästen (204, 206, 304, 306) im Montagezustand bei deren Herstellung bereits vorgehalten ist und
- nachfolgend der Kühlkörper (202, 302) gebogen wird, wobei die mit dessen seitlichen Anschlussebenen (216, 218, 316, 318) verbundenen Sammelkästen (204, 206, 304, 306) tordieren und deren Befestigungs- und Anschlussstellen ihre Solllage einnehmen.

2. Verfahren nach Anspruch 1, **dadurch gekennzeichnet, dass** ein Spannungsabbau in den Sammelkästen (204, 206, 304, 306) mittels Wärme und/oder den Werkstoff der Sammelkästen (204, 206, 304, 306) entfestigenden Stoffen unterstützt wird.

## Claims

1. A method of producing a heat exchanger (110, 200) for a motor vehicle, especially a motorcycle (100), comprising a first and a second collecting receiver (204, 206, 304, 306) and a curved, flowable-through heat dissipater (202, 302) disposed between the collecting receivers (204, 206, 304, 306) and having lateral planes (216, 218, 316, 318) for connecting to the collecting receivers (204, 206, 304, 306) and a long side and a short side (212, 214, 312, 314) between the collecting receivers (204, 206, 304, 306), wherein the collecting receivers (204, 206, 304, 306) are made of a material having much less strength (Rₘ) than the material constituting the heat dissipater (202, 302), **characterised in that**
- first the collecting vessels (204, 206, 304, 306) are connected to the lateral connecting planes (216, 218, 316, 318) of the flat heat dissipater (202, 302), wherein the displacement of the collecting receivers (204, 206, 304, 306) due to torsion in the assembled state is already provided for during manufacture thereof, and
- the heat dissipater (202, 302) is then bent, wherein the collecting receivers (204, 206, 304, 306) connected to the lateral connecting planes (216, 218, 316, 318) thereof are twisted and the fastening and connecting places occupy the required position.

2. A method according to claim 1, **characterised in that** a reduction in stresses in the collecting receivers (204, 206, 304, 306) is assisted by heat and/or by substances which reduce the strength of the material constituting the collecting receivers (204, 206, 304, 306).

## Revendications

1. Procédé de fabrication d'un échangeur de chaleur (110, 200) d'un véhicule automobile, notamment d'un motocycle (100) comportant un premier et un second boîtier collecteur (204, 206, 304, 306), ainsi qu'un radiateur (202, 302) installé entre les boîtiers collecteurs (204, 206, 304, 306), traversés par un fluide et cintrés, et ayant des surfaces de raccordement latérales (216, 218, 316, 318) pour être reliées aux boitiers collecteurs (204, 206, 304, 306) et un grand et un petit côté (212, 214, 312, 314) entre les boîtiers collecteurs (204, 206, 304, 306),
- les boîtiers collecteurs (204, 206, 304, 306) étant en un matériau ayant une caractéristique de résistance mécanique (Rₘ) considérablement plus faible que le matériau du radiateur (202, 302), procédé **caractérisé en ce qu'**
- on relie tout d'abord les boîtiers collecteurs (204, 206, 304, 306) aux surfaces de raccordement latérales (216, 218, 316, 318) du radiateur plat (202, 302),
* le déplacement lié à la torsion des boîtiers collecteurs (204, 206, 304, 306) à l'état de montage étant déjà pris en compte lors de leur fabrication, et
- ensuite on cintre le radiateur (202, 302),
* les boîtiers collecteurs (204, 206, 304, 306) reliés aux surfaces de raccordement (216, 218, 316, 318) latérales étant tordus et leurs points de fixation et de raccordement, prennent leur position de consigne.

2. Procédé selon la revendication 1,
**caractérisé en ce qu'**
on élimine les contraintes dans les boîtiers collecteurs (204, 206, 304, 306) par de la chaleur et/ou en utilisant des matériaux renforçant les matériaux des boîtiers collecteurs (204, 206, 304, 306).
